# EUROPÄISCHE PATENTSCHRIFT

(11) **EP 2 256 255 B1**
(45) Veröffentlichungstag und Bekanntmachung des Hinweises auf die Patenterteilung: **17.04.2013**
(21) Anmeldenummer: 10164163.7
(22) Anmeldetag: 27.05.2010
(51) Int. Cl.: E02F 5/10, F16L 1/028, H02G 1/06

(54) **Kabelverlegevorrichtung**
Cable laying device
Dispositif pour placer des câbles

(30) Priorität: 29.05.2009 DE 102009024323
(43) Veröffentlichungstag der Anmeldung: 01.12.2010
(73) Patentinhaber: Doppelacker GmbH, 15370 Petershagen-Eggersdorf (DE); Technische Universität Dresden, 01069 Dresden (DE)
(72) Erfinder: Kluge, Jens, 15370 Petershagen-Eggersdorf (DE)
(74) Vertreter: Kailuweit & Uhlemann Patentanwälte

(56) Entgegenhaltungen:
- EP-A2- 0 355 278
- BE-A3- 1 011 822
- DE-A1- 2 519 642
- DE-A1- 3 335 651
- FR-A5- 2 102 575
- US-A- 3 590 588
- US-A- 3 670 512
- US-A- 3 802 210
- US-A- 3 849 999
- US-A- 4 047 387
- US-A- 4 098 089
- US-A- 4 379 655
- US-A- 5 934 833
- US-A- 5 975 804
- US-A1- 2007 286 681

## Beschreibung

Gegenstand der vorliegenden Erfindung ist eine Vorrichtung, die es ermöglicht, mindestens zwei Gruppen von biegsamen Medienleitungen in einem oberflächennahen Bereich axial horizontal beabstandet und parallel zueinander gleichzeitig zu verlegen, wobei die Verlegevorrichtung eine Schneidvorrichtung zur Erzeugung eines Schlitzes im Boden aufweist, und die Schneidvorrichtung durch den Boden bewegt wird, wobei, in Bewegungsrichtung gesehen, hinter der Schneidvorrichtung Vorrichtungen zum Ausbringen der Gruppen von biegsamen Medienleitungen angeordnet sind.

Aus dem Stand der Technik ist eine Reihe von Verlegevorrichtungen bekannt. So werden üblicherweise Schlitze im Boden erzeugt, auf deren Sohle ein oder mehrere Kabel oder Medienleitungen verlegt werden. Entsprechende Lösungen sind z. B. in der DE 42 10 858 C2 oder der DE 199 28 683 C2 beschrieben. Bekannt sind auch Lösungen, bei denen ein Rohr in einen, mittels eines Schwertes erzeugten Schlitz, eingezogen wird, wobei gleichzeitig noch ein Warnband und eine Steuerleitung oberhalb des verlegten Rohres ins Erdreich eingebracht werden (DE 196 23 922 C2). Bekannte Hersteller derartiger Verlegevorrichtungen sind z. B. die Walter Föckersperger GmbH oder die Lancier Cable GmbH.

All diesen Lösungen ist gemein, dass mit einer schwertförmigen Vorrichtung ein einzelner vertikale Schlitz im Boden erzeugt wird und die Leitungen direkt nebeneinander verbaut werden, so dass sie wenigstens teilweise einander berühren oder aber vertikal beabstandet, in der Projektion auf die Erdoberfläche direkt übereinander, mit einem Abstand in dem einen Schlitz angeordnet werden. Diese Geräte sind somit nur bedingt geeignet, ein flächiges Verlegemuster von Leitungen zu erzeugen, da sie für jede Verlegezeile eine Fahrt über das Verlegeareal benötigen.

Die US 3 802 210 A beschreibt einen Kabelverlegepflug, der die gleichzeitige Ausbringung mehrer Kabel ermöglicht. Die Schwertanordnung ist zweigeteilt und weist einen vorauslaufenden vertikalen Schnittteil und einen nachfolgenden Verlegeteil auf, der an den Schwertteil beweglich angekoppelt ist. An dem vertikalen Verlegeteil ist eine verdrehbare horizontale Schneide angeordnet, an deren Rückseite zwei Öffnungen zum Austritt von Kabeln vorgesehen sind. Am unteren Ende des Verlegeteils findet sich eine weitere Öffnung zur Verlegung eines Kabels oder einer Rohrleitung. Es wird beschrieben, dass die verdrehbare horizontale Schneide auch ohne den Verlegeteil eingesetzt und direkt an das Schwert angekoppelt werden kann. Es kommt ein einzelnes vertikales Schwert zum Einsatz.

Die DE 2519642 A1 zeigt einen Pflug mit zwei Schwertern, die im Boden in V-Form zusammenlaufen. Am unteren Ende der Schwerter ist eine Austrittsöffnung für Medienleitungen angeordnet. Es können mehrere Medienleitungen gleichzeitig verlegt werden, die dann jedoch nicht axial beabstandet sind. Die Medienleitungen werden in den beiden Freiräumen hinter dem Pflug bis zum Scheitelpunkt des V's getrennt geführt und dort dann gemeinsam verlegt.

Die US 5 934 833 A stellt ebenfalls einen Kabelpflug mit V-förmigen Schwertern vor. Diese dienen jedoch dazu, die Medienleitungen in den Boden einzuziehen und nicht diese einzulegen. Eine spannungsfreie Verlegung der Medienleitungen ist so nicht möglich.

Die US 4,098089 offenbart eine Konstruktion zur Verlegung von Folien im Boden. Zu diesem Zweck ist ein horizontales Schwert mit einer Innenkammer ausgestattet, in der sich der Folienvorrat befindet. Die Folie wird während der Bewegung des Schwertes an dessen Rückseite ausgebracht und trennt so die oberhalb und die unterhalb des Schwertes befindlichen Bodenlagen voneinander. Besonders nachteilig an dieser Konstruktion ist, dass das Schwert zum Zwecke der Aufnahme des Folienvorrates eine Höhe aufweist, die sich bei der Bewegung durch den Boden als zusätzlicher Widerstand manifestiert.

Es stellt sich somit die Aufgabe, eine Verlegevornchtung zu schaffen, die geeignet ist, eine effektive flächenhafte Verlegung von Medienleitungen im Untergrund zu ermöglichen.

Erfindungsgemäß wird diese Aufgabe mit der im Anspruch 1 offenbarten Vorrichtung gelöst. Ein Verfahren zum Einsatz der Vorrichtung ist im Anspruch 15 und die Verwendung der Vorrichtung im Anspruch 20 offenbart. Vorteilhafte Ausführungsformen sind in den rückbezogenen Unteransprüchen offenbart.

Die Vorrichtung nach Anspruch 1 weist eine Schneidvorrichtung auf, die einen Schlitz im Boden erzeugt, der nicht nur vertikal, wie im Stand der Technik beschrieben, verläuft. Der Schlitz wird im Boden erzeugt, indem die Schneidvorrichtung in Verlegerichtung durch diesen hindurchbewegt wird. Die Schneidvorrichtung schneidet somit durch den Erdkörper (Boden). Die Schneidvorrichtung weist an der, der Verlegerichtung entgegengesetzten Seite (Rückseite) Vorrichtungen zum Ausbringen auf, durch die die Medienleitungen in den Schlitz eingebracht werden. Dabei werden zwei oder mehr Gruppen von Medienleitungen in mindestens einer flächigen Lage, in den Boden eingebracht. Die Gruppen von Medienleitungen verlaufen parallel zueinander, sind jedoch axial beabstandet, d. h. zwischen zwei Gruppen von Medienleitungen besteht ein Abstand, der mindestens dem Durchmesser der dicksten Medienleitung der beiden Gruppen entspricht. Jede Medienleitungsgruppe enthält mindestens eine Medienleitung. Die Bezeichnung "Schneidrichtung" bezieht sich auf die Richtung, in der sich das Schwert bewegt. Sie ist mit der Verlegerichtung identisch.

Im Folgenden schließt der Begriff "Medienleitungen" die Eigenschaft ein, für eine Gruppe gleicher oder verschiedenartiger Medienleitungen zu stehen.

Die Medienleitungen sind vorteilhaft elastisch und können bis zu einem bestimmten Biegeradius gekrümmt werden. Der Biegeradius hängt von Art und Material der Medienleitungen ab.

Durch die erfindungsgemäße Gestaltung der Verlegevorrichtung können mehrere Medienleitungen parallel verlegt werden. Dadurch wird die Schnittfläche/ der Bodeneingriff bei der flächigen Verlegung von Medienrohren, wie es z. B. bei der Verlegung von Drainagerohren oder Wärmetauscherrohren im Boden notwendig sein kann, stark reduziert. Die Schnittkräfte, aber auch die Zerstörung der gewachsenen Bodenstruktur sind gegenüber einer Verlegung mit bisher bekannten Kabelpflügen deutlich reduziert. Dadurch können landwirtschaftliche Nutzflächen, in denen bodennah Wärmetauscherrohrleitungen zur Gewinnung oberflächennaher agrothermischer Energie verlegt wurde, uneingeschränkt genutzt werden, ohne dass die über lange Zeiträume gewachsene Bodenstruktur nachhaltig geschädigt wird. Darüber hinaus sind ökologisch vorteilhaft weniger Fahrzyklen notwendig um das gesamte zu bearbeitende Areal zu verrohren.

Wie dargestellt bestimmt die Form der Schneidvorrichtung die Form des entstehenden Schlitzes im Boden. Die Form der Schneidvorrichtung ist abhängig von der Anzahl und räumlichen Lage der zu verlegenden Medienleitungen.

Die Form der Schneidvorrichtung wird im Folgenden als Projektion auf eine Ebene, die senkrecht zur Schneidrichtung ist, beschrieben.

Vorteilhaft weist die Schneidvorrichtung mindestens ein vertikales Schwert auf, an dessen unterem Ende ein zweites, horizontales Schwert angeordnet ist. Der entstehende Schlitz weist die Form einer horizontalen Basislinie mit einer darauf mittig ausgebildeten vertikalen Linie auf. Das zweite, horizontale Schwert verfügt vorteilhaft über mindestens zwei Vorrichtungen zum Ausbringen der Medienleitungen.

In einer gleichfalls bevorzugten Ausführungsform weist die Schneidvorrichtung zwei vertikale Schwerter auf, die an ihrem unteren Ende mit einem dritten, horizontalen Schwert verbunden sind. Der entstehende Schlitz weist die Form eines oben geöffneten Rechtecks auf. Das dritte horizontale Schwert verfügt vorteilhaft über mindestens zwei Vorrichtungen zum Ausbringen der Medienleitungen.

In einer bevorzugten Ausführungsform erfolgt ein Vorschneiden des Erdkörpers mit einer Vorschneideinrichtung, die korrespondierende Schwerter aufweist, deren Anordnung der der Schwerter der Schneidvorrichtung entspricht. Die Vorschneideinrichtung weist in einer weiteren bevorzugten Ausführungsform nicht für jedes Schwert der Schneideinrichtung ein korrespondierendes Schwert auf. Die Vorschneideinrichtung schneidet den Boden insbesondere an den Stellen vor, die von den Schwertern der Schneidvorrichtung geschnitten werden. Durch das Vorschneiden ist der Boden bereits gelöst worden und die Schwerter der Schneideinrichtung stoßen auf geringeren Widerstand.

So wird beispielsweise der Boden vor der Schneidvorrichtung durch zwei vertikale Schwerter vorgelöst. Sie schneiden den Erdkörper in einem Abstand wenigstens teilweise vor, der dem der beiden folgenden Schwerter der Schneidvorrichtung entspricht, wobei die beiden folgenden Schwerter durch ein drittes horizontales Schwert verbunden sind, welches dann die Medienleitungen ausbringt.

In einer bevorzugten Ausführungsform erfolgt während des (Vor-)Schneidens des Erdkörpers eine bodenphysikalische Untersuchung (Detektierung) des Bodens. Dies erfolgt mittels Sender/Empfänger-Kombinationen. Jedem Sender ist mindestens ein korrespondierender Empfänger zugeordnet. Es kommen sowohl reflexiv (reflektierend), als auch transflexiv (durchdringend) arbeitende Sensoren zum Einsatz. Bei den reflexiv arbeitenden Detektoren sind Sender und Empfänger bevorzugt dicht beabstandet und der Empfänger erfasst die von einem Hindernis reflektierten Signale des Senders. Bei der transflexiven Arbeitsweise sind Sender und Empfänger räumlich getrennt und es werden die Hindernisse erfasst, die auf dem Signalweg vom Sender zum Empfänger für eine Signalunterbrechung oder signifikante Signalschwächung sorgen. Die Detektierung ist bevorzugt auf das Erkennen von Hinderniskörpern (Steine, Fundamentreste, Kabel, Rohrleitungen, sonstige Einlagerungen) im Boden gerichtet. Dazu sind beispielsweise an den beabstandeten Schwertern der Schneidvorrichtung und/oder, falls eine solche zum Einsatz kommt, denen, der Vorschneideinrichtung, Sensoren mit Sende- und/oder Empfangseinheit angeordnet. Die Detektierung erfasst sowohl den Raum zwischen den Schwertern als auch den umgebenden Raum in der sensorspezifischen Detektierungstiefe. Insbesondere der Raum, der von dem horizontalen Schwert passiert werden wird, bedarf der Erkundung. Dies ist bevorzugt eine Tiefe von 1,75 m bis 2,25 m.

In einer bevorzugten Ausführungsform ist an einem Schwert der Vorschneideinrichtung ein Sender und an einem zweiten Schwert ein Empfänger angeordnet. In einer weiteren bevorzugten Ausführungsform sind Sender oder Empfänger an den Schwertern der Schneidvorrichtung und/oder der Vorschneideinrichtung angeordnet, während die korrespondierenden Empfänger bzw. Sender an einer oder mehreren weiteren parallel betriebenen Vorschneideinrichtungen und/oder Schneidvorrichtungen angeordnet sind. Diese können sich gleichsinnig oder gegensinnig parallel zueinander bewegen.

In einer weiteren bevorzugten Ausführungsform sind Sender oder Empfänger an den Schwertern der Schneidvorrichtung und/oder der Vorschneideinrichtung angeordnet, während die korrespondierenden Empfänger bzw. Sender an stationären Messstellen auf dem Boden und/oder in verschiedenen Bodentiefen angeordnet sind.

In einer alternativen Ausgestaltung wird der Boden durch auf der Erdoberfläche angeordnete Radarsensoren nach Hindernissen abgetastet.

Die Schwerter sind vorteilhaft in Bewegungsrichtung keilförmig ausgebildet, um das Durchdringen des Bodens zu erleichtern.

In einer weiteren bevorzugten Ausführungsform weist die Schneidvorrichtung eine gebogene, halbkreisförmige oder ovale Form auf. Die Vorrichtungen zum Ausbringen der Medienleitungen sind nun symmetrisch zu einer Senkrechten, die von der Erdoberfläche zum tiefsten Punkt der Schneidvorrichtung verläuft, angeordnet. Auf diese Weise entstehen Lagen, in denen die Medienleitungen parallel zueinander, axial beabstandet verlegt sind, wobei der axiale Abstand der Medienleitungen einer Lage in Richtung zur Erdoberfläche zunimmt.

In einer weiteren bevorzugten Ausführungsform weist die Schneidvorrichtung eine polygonale Ausformung auf. Die Schneidvorrichtung ist dabei vorteilhaft symmetrisch zu einer Ebene ausgebildet, die senkrecht zur Erdoberfläche in Schneidrichtung verläuft. Die Vorrichtungen zum Ausbringen der Medienleitungen sind ebenfalls symmetrisch zu dieser Ebene angeordnet. Beim Verlegen entstehen somit Lagen, in denen die Medienleitungen parallel zueinander, axial beabstandet verlegt sind.

Eine weitere bevorzugte Ausführungsform weist eine Schwertkonstruktion auf, die die Form eines umgedrehten "Y" aufweist. Dabei sind an einem vertikalen Schwert zwei weitere Schwerter befestigt, die einen stumpfen Winkel zu dem horizontalen Schwert bilden.

Vorteilhaft ist zum Ausweichen vor Hindernissen oder zum Erreichen der Verlegetiefe die horizontale und vertikale Neigung der Schneidvorrichtungen oder von Teilen der Schneidvorrichtungen (wie z. B. den Schwertern) veränderbar. Die Schneidvorrichtung weist vorteilhaft Hilfen zum besseren Durchdringen des Erdreichs auf. Dazu weisen in einer bevorzugten Ausführungsform die Schneidvorrichtung Einrichtungen auf, die die Schneidvorrichtung mit Vibrationen, Schwingungen oder Rüttelbewegungen beaufschlagen. In einer weiteren bevorzugten Ausführungsform werden reibungsmindernde Mittel im Bereich der Schwerter der Schneidvorrichtung (Wasser, Emulsionen) ausgebracht.

Vorteilhaft wird vor dem Einsatzbeginn am Rand des zu bearbeitenden Gebietes ein Graben angelegt, der in seiner Tiefe mindestens der Einsatztiefe der Verlegevorrichtung entspricht. Ein solcher Graben wird als "Kopfgraben" bezeichnet. Die Verlegevorrichtung wird dann in dem Kopfgraben angesetzt und verlegt die Medienleitungen sofort in der gewünschten Tiefe. Die Verlegevorrichtung kann auf demselben Areal mehrere Verlegevorgänge in verschiedenen Bodentiefen ausführen, so dass mehrere Lagen von Medienleitungen übereinander im Boden angeordnet werden. Dabei wird zuerst die Lage in der größten Bodentiefe ausgebildet und anschließend mit weiteren Verlegefahrten die jeweils nächst höheren Lagen verlegt. Wenn die Medienleitungen mit ausreichend Überstand in den Graben hineinreichen, kann das überstehende Ende der Medienleitung aus dem Graben herausgeführt und bequem an der Oberfläche an eine Sammelleitung angeschlossen werden. Anschließend werden die Sammelleitungen, ggf. unter Einbringung eines geeigneten Sandbetts, auf der Grabensohle abgelegt und der Kopfgraben verfüllt.

Die Verlegevorrichtung weist einen über die Bodenobefläche hinausreichenden Teil auf, an dem das Zugmittel zur Bewegung der Verlegevorrichtung angreift. Vorteilhaft erfolgt die Zuführung der Medienleitungen zu den Verlegevorrichtungen über das Innere der Schneidvorrichtung. Der über den Boden hinausreichende Teil der Schneidvorrichtung weist dabei eine oder mehrere Öffnungen auf, über die die biegsamen Medienleitungen in das Innere der Schneidvorrichtung geführt werden. In der Schneidvorrichtung werden die Medienleitungen einzeln oder gemeinsam zu den jeweiligen Vorrichtungen zum Ausbringen in den Boden geführt. Dies ermöglicht eine spannungsfreie Verlegung, da keine nennenswerten Zugkräfte auf die Medienleitungen wirken.

In bevorzugten Ausführungsformen wird die Kraft zur Bewegung der Verlegevorrichtung durch eine Zugmaschine, wie ein Raupenschlepper oder ein Großtraktor aufgebracht, die die Verlegevorrichtung zieht oder schiebt. Es ist jedoch auch der Einsatz einer Seilzugvorrichtung oder eines Spezialgerätes zur Bewegung der Verlegevorrichtung möglich. Bevorzugt sind die Schwerter der Vorschneideinrichtung an der, in Bewegungsrichtung gesehen, vorderen Seite und die Schwerter der Schneidvorrichtung an der hinteren Seite der Verlegevorrichtung angeordnet.

In einer weiteren bevorzugten Ausführungsform werden Vorschneideinrichtung und Schneidvorrichtung von getrennten Zugmitteln bewegt. So kann die Vorschneideinrichtung während des Bodenvorschnitts die bodenphysikalische Erkundung ausführen, und nach Auswertung der Ergebnisse kommt die Schneidvorrichtung zum Einsatz und es werden die Medienleitungen verlegt, wobei vorteilhaft im Boden enthaltene Hindernisse umfahren werden können.

In einer bevorzugten Ausführungsform erfolgt die Bewegung der Verlegevorrichtung mittels Ziehens entlang der beabsichtigten Verlegerichtung. Die dazu notwendige Kraft wird vorteilhaft mit einem hydraulischen Zugsystem (Hydrozylinder), elektromechanisch (Spindeln), hydromechanisch (doppeltwirkende Hydrozylinder) oder Seilwinden aufgebracht und wirkt über Ketten oder Seilzüge auf die Verlegevorrichtung ein. Diese Bewegung mittels externer verankerter Zugmittel kann auch zur Unterstützung der Bewegung durch eine Raupe oder einen Traktor eingesetzt werden.

In einer weiteren bevorzugten Ausführungsform erfolgt die Vorwärtsbewegung der Verlegevorrichtung diskontinuierlich. Vorteilhaft wird ein Zyklus von Vorschub des Zugmittels - Verankern des Zugmittels - Vorschub der Verlegevorrichtung eingehalten. Hierbei muss die Zugkraft mindestens teilweise durch das Zugmittel aufgebracht werden. Es besteht jedoch nicht die Gefahr, dass die treibenden Räder oder Ketten des Zugmittels bei großem Widerstand im Boden ihre Haftung verlieren. Das Verankern des Zugmittels kann vorteilhaft durch die Ausbringung von Bodenankern, das Absenken eines Schubschildes am Zugmittel oder einer profilierten Bodenplatte erfolgen. In einer bevorzugten Ausführungsform wird ein Schreitsystem verwendet, dass sich mittels absenkbarer Stützen im Boden verankert.

Vorteilhaft weist die Verlegevorrichtung Führungseinrichtungen auf der Erdoberfläche auf, die dafür sorgen, dass die Ausrichtung der Schneidvorrichtung und die Verlegung der Medienleitungen in der gewünschten Tiefe erfolgt und die Schneidvorrichtung nicht durch zu große horizontale Neigung im Boden festläuft oder durch zu geringe horizontale Neigung zur Erdoberfläche aufsteigt.

In einer bevorzugten Ausführungsform erfolgt die Steuerung der Verlegerichtung über die Zugvorrichtung. Vorteilhaft wird eine Richtungskorrektur der Zugvorrichtung durch die Schwenkbarkeit der Schwerter erreicht. Dabei sind die vertikalen Schwerter bevorzugt um eine vertikale Achse schwenkbar und die horizontalen Schwerter sind bevorzugt um eine horizontale Achse schwenkbar. Bei parallel geführten Schwertern wird die Lenkbewegung auf beide Schwerter gleichermaßen übertragen, um auseinanderspreizende oder zusammen ressende Kräfte zwischen den Schwertern zu vermeiden.

In einer bevorzugten Ausführungsform ist die Schneidvorrichtung an einer Trägereinrichtung angeordnet, die ihrerseits an einem Zugmittel befestigt ist. Das Zugmittel verfügt über die Möglichkeit die Trägereinrichtung zu schwenken. Eine Lenkbewegung kann somit durch das Verschwenken der Trägereinrichtung und/oder eine Schwenkung der vertikalen Schwerter erfolgen. Eine Korrektur der Verlegetiefe erfolgt bevorzugt, indem die horizontalen Schwerter verschwenkt werden. In einer weiteren bevorzugten Ausführungsform wird die Verlegetiefe geändert, indem die Trägereinrichtung geneigt wird. Da das horizontale Schwert in definierter Position zu der Trägereinrichtung angeordnet ist, wird auf diese Weise auch die Neigung des horizontalen Schwerts verändert. Die veränderbare Verlegetiefe ermöglicht es nicht nur im Boden vorhandenen Hindernissen auszuweichen, sondern gestattet es auch, an vorgegebenen Verlegepositionen die Verlegetiefe zu reduzieren. Dies kann vorteilhaft dazu genutzt werden, um an den Verlegepositionen mit reduzierter Tiefe Anschlüsse an die verlegten Medienleitungen anzubringen. So können große Flächen in einem Arbeitsgang verlegt werden, und durch die parallele Anordnung von Verlegepositionen mit reduzierter Tiefe können diese Verlegepositionen miteinander durch Kopfgräben verbunden und in den Kopfgräben Sammelleitungen eingebracht werden. Die mit Medienleitungen belegte Fläche kann so in mehrere einzelne Felder aufgeteilt werden.

In einer bevorzugten Ausführungsform führt die Verlegevorrichtung vorkonfektionierte Medienleitungen in Gebinden, wie Kabeltrommeln bzw. in austauschbaren Kassetten während des Verlegevorgangs mit. Diese Gebinde können leicht und schnell gewechselt werden und Beschleunigen den Arbeitsprozess. Vorteilhaft enthält eine derartiges Gebinde etwa jeweils 100 m vorkonfektionierter Medienleitungen, was der durchschnittlichen Verlegelänge eines Verlegefeldes entspricht.

Typische Verlegetiefen der Medienleitungen liegen zwischen 0,5 m und 3,0 m, um die mit zunehmender Verlegetiefe größer werdende notwendige Kraft zur Bewegung der Verlegevorrichtung zu begrenzen. Vorteilhaft werden mit der Verlegevorrichtung Wärmetauscherrohre als Medienleitungen verlegt, die zur Gewinnung thermischer Energie aus dem Boden genutzt werden.

### Erläuterungen zu den Figuren

Die Figuren stellen bevorzugte Ausführungsformen und Ergebnisse des Einsatzes von bevorzugten Ausführungsformen der erfindungsgemäßen Vorrichtung dar, ohne die Erfindung auf diese Ausführungsformen zu beschränken.

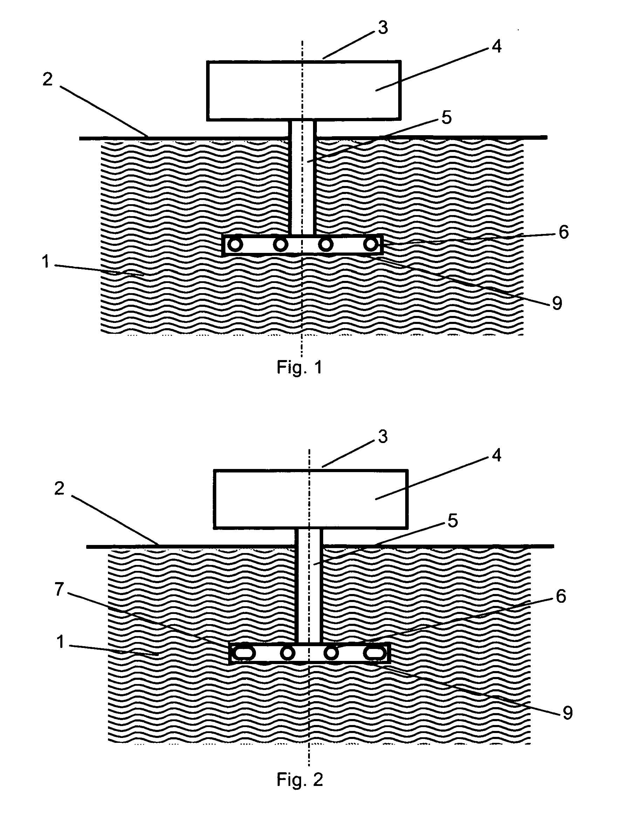

Fig. 1 (nicht unter die Erfindung fallend) zeigt die prinzipielle Darstellung der Gestaltung einer Verlegevorrichtung (3), mit einem vertikalen Schwert (5) und einem horizontalen Schwert (9). Die Bewegungsrichtung der Vorrichtung verläuft senkrecht in die Darstellungsebene hinein. An dem horizontalen Schwert (9) sind vier gleichartige Vorrichtungen (6) zum Ausbringen der Medienleitungen (hier für einzelne, axial beabstandete Medienleitungen) angeordnet.
Fig. 2 (nicht unter die Erfindung fallend) zeigt die prinzipielle Darstellung einer Verlegevorrichtung (3) wie in Fig. 1. Lediglich die beiden äußeren Vorrichtungen (7) zum Ausbringen der Medienleitungen sind für zwei parallele, nicht beabstandete Medienleitungen ausgelegt. Die beiden inneren Vorrichtungen (6) sind für das Ausbringen einzelner Medienleitungen ausgelegt.

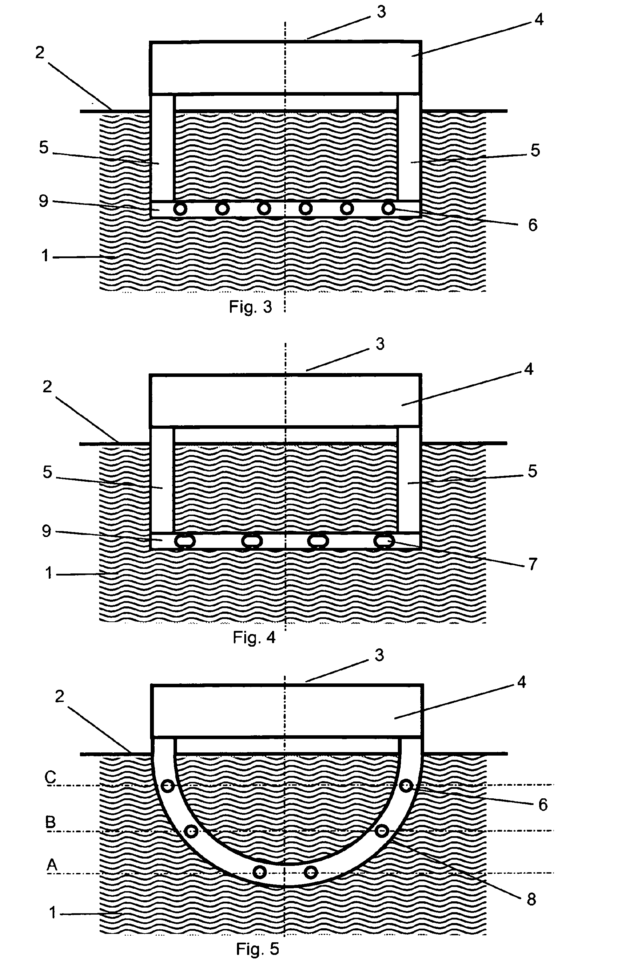

Fig. 3 zeigt die prinzipielle Darstellung der Gestaltung einer Verlegevorrichtung (3), mit zwei vertikalen Schwertern (5) und einem horizontalen Schwert (9). Die Bewegungsrichtung der Vorrichtung verläuft senkrecht in die Darstellungsebene hinein. An dem horizontalen Schwert (9) sind sechs gleichartige Vorrichtungen zum Ausbringen der Medienleitungen (hier für einzelne, axial gleich beabstandete Medienleitungen) dargestellt.
Fig. 4 zeigt die prinzipielle Darstellung einer Verlegevorrichtung (3) wie in Fig. 3. Das horizontale Schwert weist hier vier Vorrichtungen zum Ausbringen der Medienleitungen auf, wobei jeweils zwei parallele, nicht beabstandete Medienleitungen verlegt werden.
Fig. 5 zeigt die prinzipielle Darstellung einer Verlegevornchtung mit halbkreisförmiger Schneidvorrichtung. Es entstehen drei Verlegeebenen (A, B, C) im Erdreich (1) unterhalb der Erdoberfläche (2).

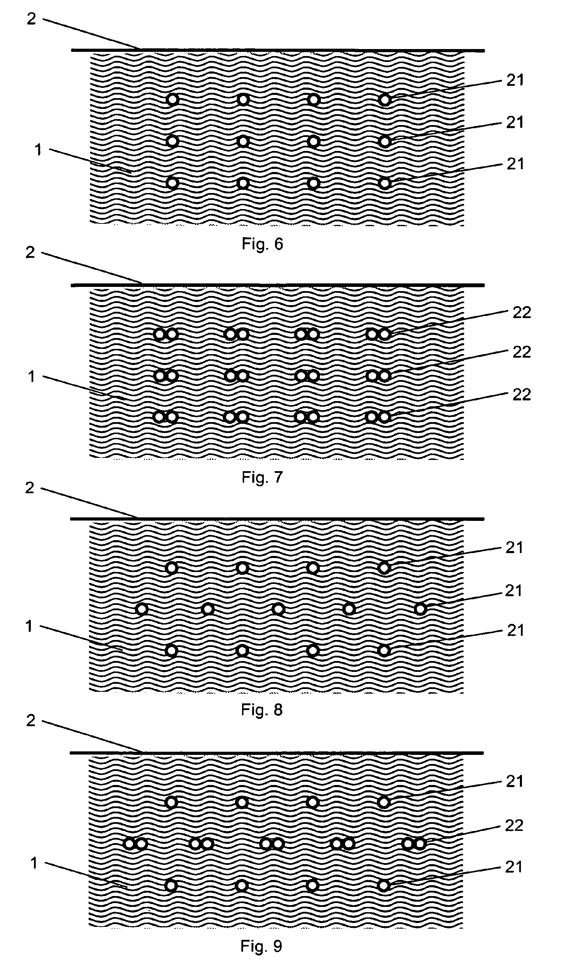

Fig. 6 bis 9 zeigen Muster, die die Medienleitungen nach mehrmaligem Einsatz der erfindungsgemäßen Vorrichtung im Boden bilden. Die Darstellung zeigt einen Schnitt durch den Boden, wobei die vormalige Bewegungsrichtung der Verlegevornchtung senkrecht zur Darstellungsebene verläuft. So ist es möglich, sowohl Gruppen von Medienleitungen, die nur eine Medienleitung (21) aufweisen, als auch solche mit mehreren Medienleitungen (22) anzuordnen.

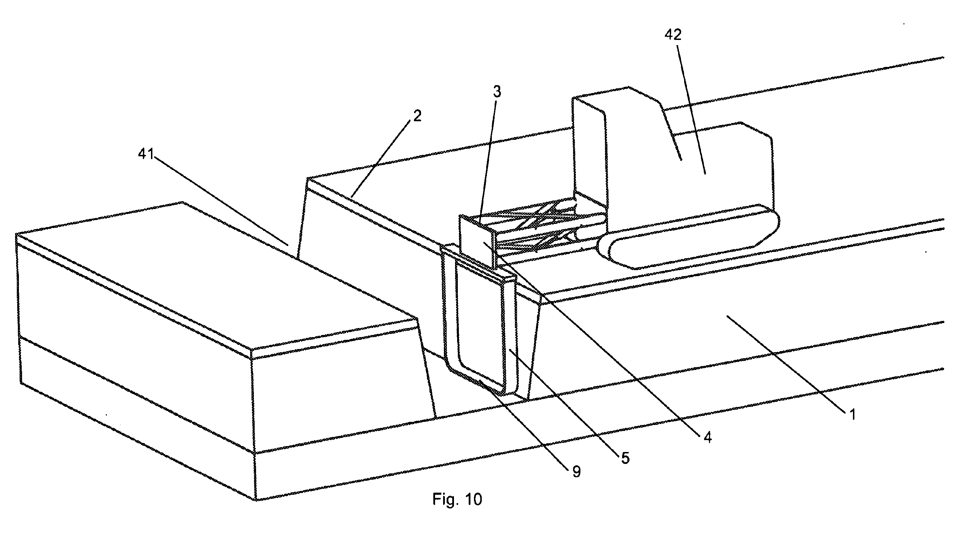

Fig. 10 stellt den Einsatz einer Verlegevorrichtung (3) in einem Graben (41) dar. Es handelt sich um eine Verlegevorrichtung mit zwei vertikalen Schwertern (5) und einem horizontalen Schwert (9). Die Zugmaschine (42) bringt die Kraft über den oberirdischen Teil (4) der Verlegevorrichtung in diese ein (auf die Darstellung der Vorrichtungen zum Ausbringen der Medienleitungen, die Gebinde der Medienleitungen sowie auf die Medienleitungen selbst wurde verzichtet).

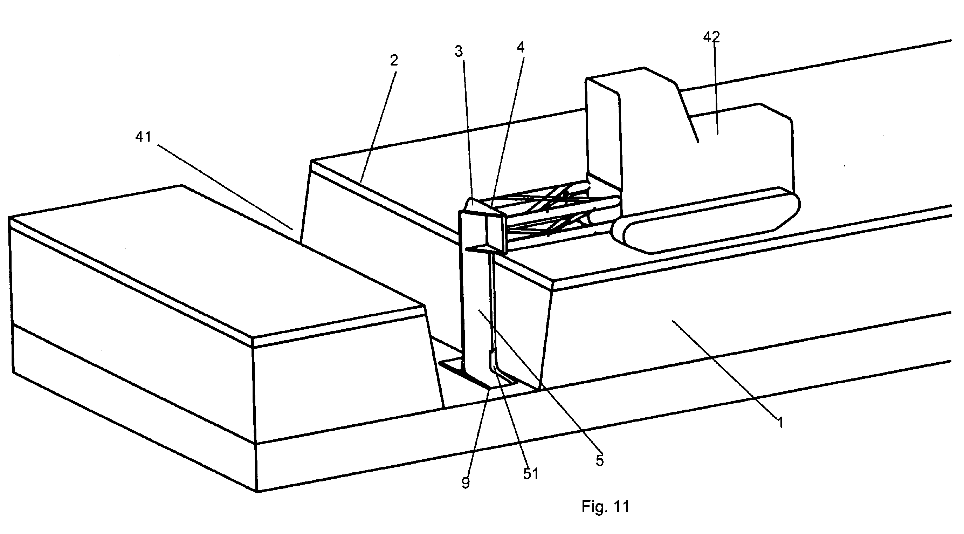

Fig. 11 (nicht unter die Erfindung fallend) entspricht der Darstellung von Fig. 10, nur dass hier eine Verlegevorrichtung mit einem vertikalen Schwert (5) und einem horizontalen Schwert (9) verwendet wird. Die keilförmige Ausbildung (51) der Schwerter in Bewegungsrichtung ist ebenfalls dargestellt.

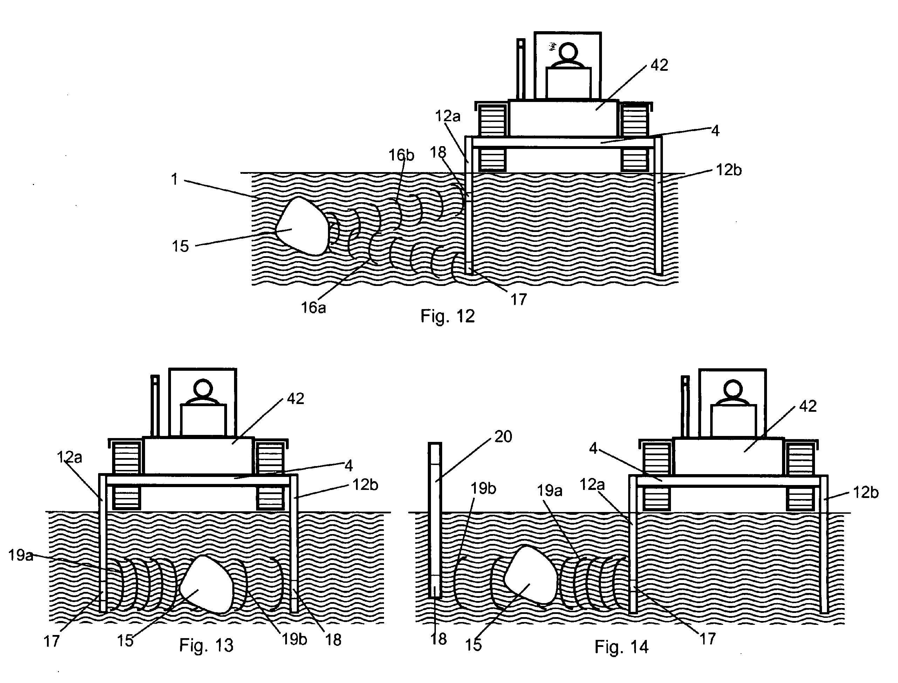

Fig. 12 zeigt die bodenphysikalische Erkundung während des Vorschneidens. Es ist eine reflexive Erkundungsmethode dargestellt, bei der von dem Sender (17) ein wellenartiges Signal (16a) (Schall oder elektromagnetische Wellen) ausgesandt wird. Das Signal (16a) wird an dem Hindernis (15) reflektiert und läuft als reflektiertes Signal (16b) zum Empfänger (18). Sowohl Sender (17) als auch Empfänger (18) sind am linken Schwert (12a) der Vorschneideinrichtung oder alternativ über der Erdoberfläche angeordnet.
Fig. 13 zeigt eine Ausfizhrungsform der transmissiven bodenphysikalischen Erkundung. Der Sender (17) ist am linken Schwert (12a) und der Empfänger (18) am rechten Schwert (12b) der Vorschneideinrichtung angeordnet. Die einfallende Welle (19a) wird teilweise durch das Hindernis (15) absorbiert oder reflektiert und läuft nach dem Passieren des Hindernisses als geschwächte Welle (19b) zum Empfänger (18). Bei dieser Variante werden insbesondere Hindernisse erfasst, die sich auf der vorgesehenen Bewegungslinie des horizontalen Schwertes befinden.
Fig. 14 zeigt eine weitere Variante der transmissiven bodenphvsikalischen Erkundung. Vom Sender (17) am linken Schwert (12a) der Vorschneideinrichtung läuft die Welle (19a) zum Hindernis (15) an dem sie teilweise reflektiert und absorbiert wird. Die geschwächte Welle (19b) erreicht den Empfänger (18) an der stationären Messstelle (20). Größe und Ort des Hindernisses (15) lassen sich aus dem Signalgang ermitteln, der von der Messstelle (20) erfasst wird.

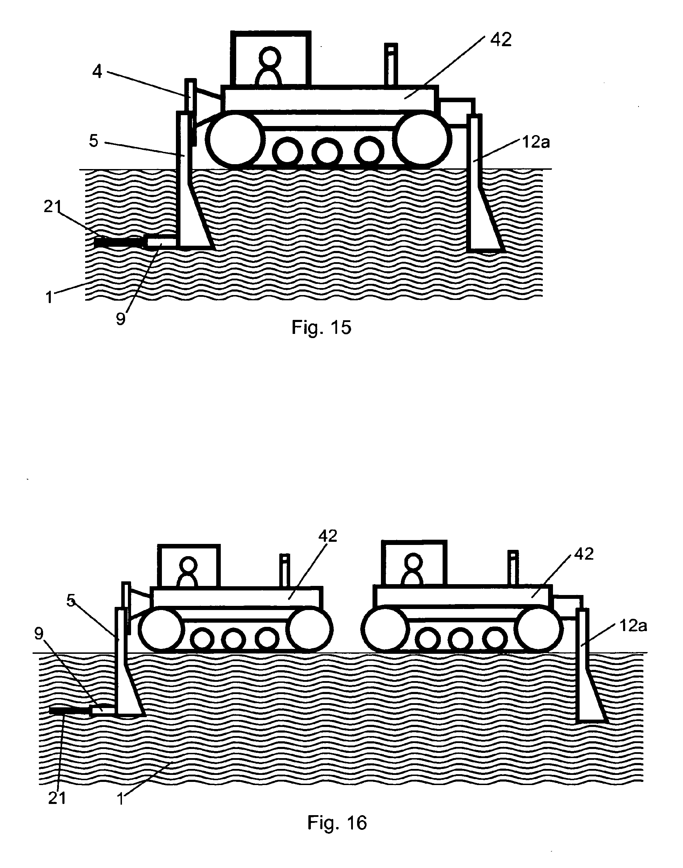

Fig. 15 zeigt ein mobiles Zugmittel (42), hier eine Raupe, an deren (in Bewegungsrichtung gesehen), vorderem Ende eine Vorschneideinrichtung mit einem rechten vertikalen Schwert (12a) angeordnet ist. Ein weiteres vertikales Schwert (12b) ist aufgrund der Darstellung verdeckt. Am Heck des mobilen Zugmittels (42) ist die Verlegevorrichtung über eine Trägereinrichtung (4) (Teil zum Angriff der Schub- oder Zugkraft) angeordnet. Die Vorratsrolle der Medienleitungen und deren Zuführung wurden aus Gründen der Übersichtlichkeit nicht dargestellt. Die Verlegevorrichtung weist ein horizontales Schwert (9) auf. Sie bringt die Medienleitung (21) aus. Das dargestellte vertikale Schwert (5) verdeckt ein weiteres vertikales Schwert (5). Die beiden vertikalen Schwerter (5) verlaufen in den bereits von den vertikalen Schwertern (12a, 12b) der Vorschneideinrichtung an derselben Stelle geschlitzten Bodenbereichen.
Fig. 16 zeigt, wie Vorschneideinrichtung und Verlegevorrichtung an getrennten mobilen Zugmitteln (42) angeordnet sind. Der Einsatz der Vorschneideinrichtung und der Verlegevorrichtung können mit zeitlichem Abstand erfolgen.

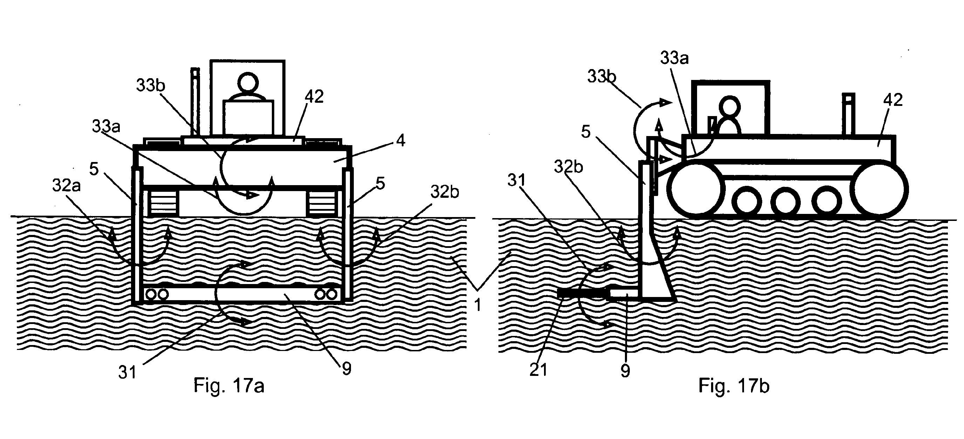

Fig. 17a und 17b zeigen die Dreh- und Neigemöglichkeiten der Schwerter und der Trägereinrichtung (4) der Verlegevorrichtung. Die vertikalen Schwerter (5) sind um vertikale Achsen (32a) und (32b) drehbar. Das horizontale Schwert (9) ist um eine horizontale Achse (31) drehbar. Die Trägereinrichtung (4) ist um eine vertikale Achse (33a) sowie eine horizontale Achse (33b) neigbar. Mit den Dreh- und Neigeeinrichtungen werden die Verlegerichtung und die Verlegetiefe gesteuert.

**Bezugszeichenliste**

| | |
|---|---|
| 1 | Erdreich des Bodens |
| 2 | Bodenoberfläche |
| 3 | Verlegevorrichtung |
| 4 | Teil zum Angriff der Schub- oder Zugkraft zur Bewegung der Vorrichtung |
| 5 | Schneidvorrichtung, vertikales Schwert |
| 6 | Vorrichtung zum Ausbringen einer Medienleitung |
| 7 | Vorrichtung zum Ausbringen einer Gruppe von Medienleitungen, die aus zwei Medienleitungen besteht |
| 8 | halbkreisförmig ausgebildete Schneidvorrichtung |
| 9 | Schneidvorrichtung, horizontales Schwert |
| 12a | Vorschneideinrichtung, linkes vertikales Schwert |
| 12b | Vorschneideinrichtung, rechtes vertikales Schwert |
| 15 | Hindernis im Boden |
| 16a | einfallende Wellenfront vom Sender zum Hindernis |
| 16b | reflektierte Wellenfront vom Hindernis zum Empfänger |
| 17 | Sender |
| 18 | Empfänger |
| 19a | einfallende Wellenfront vom Sender zum Hindernis |
| 19b | geschwächte Wellenfront nach dem Passieren des Hindernisses zum Sender |
| 20 | stationäre Messstelle |
| 21 | einzelne Medienleitung |
| 22 | zwei nebeneinander liegende Medienleitungen |
| 31 | Dreh- und Neigemöglichkeiten des horizontalen Schwertes um eine horizontale Achse |
| 32a | Drehmöglichkeit des linken vertikalen Schwertes um eine vertikale Achse |
| 32b | Drehmöglichkeit des rechten vertikalen Schwertes um eine vertikale Achse |
| 33a | Dreh-/Neigemöglichkeit der Trägereinrichtung um eine vertikale Achse |
| 33b | Dreh-/Neigemöglichkeit der Trägereinrichtung um eine horizontale Achse |
| 41 | Graben zum Ansetzen der Verlegevorrichtung (Kopfgraben) |
| 42 | Zugmaschine |
| 51 | keilförmige Ausbildung an den horizontalen und vertikalen Schwertern zur Erleichterung der Bodendurchdringung |
| A, B, C | Ebenen, in denen Gruppen von Medienleitungen im Boden verlegt werden |

## Patentansprüche

1. Verlegevorrichtung (3) zum gleichzeitigen und spannungsfreien Verlegen von mindestens zwei im wesentlichen parallelen und axial beabstandeten Gruppen (22) biegsamer Medienleitungen (21) in mindestens einer flächigen Lage (A, B, C) im Erdreich (1), wobei jede Gruppe (22) biegsamer Medienleitungen (21) mindestens eine biegsame Medienleitung (21) aufweist und die Verlegevorrichtung (3) eine Schneidvorrichtung (5, 9) zur Erzeugung mindestens eines Schlitzes im Boden (1) aufweist, wobei die Schneidvorrichtung (5, 9) genau zwei im wesentlichen vertikal angeordnete sowie in Querrichtung gestaffelte Schwerter (5) aufweist, an deren unterem Ende ein im wesentlichen horizontal ausgerichtetes Schwert (9) angeordnet ist, das mindestens zwei Vorrichtungen (6, 7) für das Ausbringen der Gruppen (22) von Medienleitungen (21) an der, der Schneidrichtung entgegen gerichteten Seite aufweist.

2. Verlegevorrichtung (3) nach einem der vorhergehenden Ansprüche, **dadurch gekennzeichnet, dass** in Verlegerichtung gesehen, vor der Schneidvorrichtung (5, 9), eine Vorschneideinrichtung (12a, 12b) angeordnet ist, deren Schwerter (12a, 12b) vollständig oder partiell mit denen der Schneidvorrichtung (5, 9) korrespondieren.

3. Verlegevorrichtung (3) nach einem der vorhergehenden Ansprüche, **dadurch gekennzeichnet, dass** die Vorschneideinrichtung (12a, 12b) in Verlegerichtung gesehen, an der vorderen Seite der Verlegevorrichtung (1) und die Schneidvorrichtung (5, 9) an der hinteren Seite angeordnet ist.

4. Verlegevorrichtung (3) nach einem der vorhergehenden Ansprüche, **dadurch gekennzeichnet, dass** horizontale und/oder vertikale Lenkbewegungen der Schneidvorrichtung (5, 9) durch horizontale/und oder vertikale Neigungs- und oder Drehbewegungen der horizontalen und/oder vertikalen Schwerter (5, 9) realisiert werden.

5. Verlegevorrichtung nach einem der vorhergehenden Ansprüche, **dadurch gekennzeichnet, dass** die Gruppen von Medienleitungen im Inneren der Schneidvorrichtung bis zu den Vorrichtungen für das Ausbringen der Gruppen von Medienleitungen geführt werden.

6. Verlegvorrichtung (3) nach einem der vorhergehenden Ansprüche, **dadurch gekennzeichnet, dass**, an einem oder mehreren der Schwerter (5, 9) der Schneidvorrichtung (5, 9) und/oder der Vorschneideinrichtung (12a, 12b) Sender (17) und/oder Empfänger (18) von Sensoren angeordnet sind.

7. Verlegevorrichtung (3) nach einem der vorhergehenden Ansprüche, **dadurch gekennzeichnet, dass** an einem oder mehreren der Schwerter (5, 9) der Schneidvorrichtung (5, 9) und/oder der Vorschneideinrichtung (12a, 12b) einer Verlegevorrichtung (3) Sender (17) und/oder Empfänger (18) von Sensoren angeordnet sind, deren korrespondierende Empfänger (18) und/oder Sender (17) an einem oder mehreren der Schwerter (5, 9) der Schneidvorrichtung (5, 9) und/oder der Vorschneideinrichtung (12a, 12b) einer parallel geführten Verlegevorrichtung (3) angeordnet sind.

8. Verlegevorrichtung (3) nach Anspruch 6 oder 7, **dadurch gekennzeichnet, dass** an einem oder mehreren der Schwerter (5, 9) der Schneidvorrichtung (5, 9) und/oder der Vorschneideinrichtung (12a, 12b) der Verlegevorrichtung (3) Sender (17) und/oder Empfänger (18) von Sensoren angeordnet sind, deren korrespondierende Empfänger (18) und/oder Sender (17) an stationären Messstellen (20) auf dem Boden (1) und/oder im Boden (1) angeordnet sind.

9. Verlegevorrichtung (3) zum gleichzeitigen und spannungsfreien Verlegen von mindestens zwei im wesentlichen parallelen und axial beabstandeten Gruppen (22) biegsamer Medienleitungen (21) in mindestens einer flächigen Lage (A, B, C) im Erdreich (1), wobei jede Gruppe (22) biegsamer Medienleitungen (21) mindestens eine biegsame Medienleitung (21) aufweist und die Verlegevorrichtung (3) eine Schneidvorrichtung (8) zur Erzeugung mindestens eines Schlitzes im Boden aufweist, wobei die Schneidvorrichtung (8) in Schneidrichtung gesehen eine runde, halbkreisförmige, ovale, polygonale oder Y-förmige Ausformung aufweist und an der, der Schneidrichtung (8) entgegengerichteten Seite mindestens zwei Vorrichtungen (6) für das Ausbringen der Gruppen (22) von Medienleitungen (21) aufweist, und wobei die Medienleitungen im Inneren der Schneidvorrichtung bis zu den mindestens zwei Vorrichtungen (6) für das Ausbringen der Gruppen (22) von Medienleitungen (21) geführt werden.

10. Verlegevorrichtung (3) nach einem der vorhergehenden Ansprüche, **dadurch gekennzeichnet, dass** die horizontale und/oder vertikale Neigung der Schneidvorrichtung (5, 8, 9) oder von Teilen der Schneidvorrichtung (5, 8, 9) veränderbar ist.

11. Verlegevorrichtung (3) nach einem der vorhergehenden Ansprüche, **dadurch gekennzeichnet, dass** die Schneidevorrichtung (5, 8, 9) mit Vibrationen, Schwingungen oder Rüttelbewegungen beaufschlagt wird.

12. Verlegevorrichtung (3) nach einem der vorhergehenden Ansprüche, **dadurch gekennzeichnet, dass** die vorkonfektionierten Medienleitungen (21) in austauschbaren Gebinden mit der Verlegevorrichtung (3) mitgeführt und aus den Gebinden in die Schneidvorrichtung (5, 8, 9) geführt werden.

13. Trägereinrichtung mit Verlegevorrichtung (3) nach einem der vorhergehenden Ansprüche, **dadurch gekennzeichnet, dass** die Schneidvorrichtung (5, 8, 9) an der Trägereinrichtung angeordnet ist.

14. Trägereinrichtung mit Verlegevorrichtung (3) nach Anspruch 13, **dadurch gekennzeichnet, dass** horizontale und/oder vertikale Lenkbewegungen der Schneidvorrichtung (5, 8, 9) durch horizontale/und oder vertikale Neigungsbewegungen der Trägereinrichtung realisiert werden.

15. Verfahren zur oberflächennahen Verlegung von axial beabstandeten Gruppen von biegsamen Medienleitungen (22) mittels einer Verlegevorrichtung (3) nach einem der Ansprüche 1 bis 8 sowie 11 oder 12, **dadurch gekennzeichnet, dass** unter Verwendung dies Verlegevorrichtung (3) mit der Schneidvorrichtung (5, 8, 9) durch die genau zwei im wesentlichen vertikal angeordneten, sowie in Querrichtung gestaffelten Schwerter (5) und das an deren unterem Ende im wesentlichen horizontal ausgerichteten Schwert (9) mindestens ein Schlitz im Boden erzeugt wird und mindestens zwei Gruppen (22) von Medienleitungen (21) an der der Schneidrichtung (5, 9) entgegengerichteten Seite ausgebracht werden.

16. Verfahren nach Anspruch 15, **dadurch gekennzeichnet, dass** bei der Erzeugung des Schlitzes im Boden eine bodenphysikalische Untersuchung erfolgt.

17. Verfahren nach einem der Ansprüche 15 oder 16, **dadurch gekennzeichnet, dass** zeitlich vor dem Einsatz der Schneidvorrichtung (5, 9) eine Vorschneideinrichtung (12a, 12b) den Boden wenigstens teilweise an den Stellen lockert, die von den Schwertern (5, 9) der Schneidvorrichtung (5, 9) geschnitten werden.

18. Verfahren nach einem der Ansprüche 15 bis 17, **dadurch gekennzeichnet, dass** unter Verwendung der Verlegevorrichtung (3) an vorgegebenen Verlegepositionen die Verlegetiefe verändert wird.

19. Verfahren nach einem der vorhergehenden Ansprüche 15-18, **dadurch gekennzeichnet, dass** zwischen Schneidvorrichtung (5, 9) und Boden (1) ein reibungsreduzierendes Mittel eingebracht wird.

20. Verwendung einer Verlegevorrichtung (3) nach einem der Ansprüche 1 bis 12 zur oberflächennahen Verlegung von axial beabstandeten Gruppen (22) von Drainagerohren (21).

21. Verwendung einer Verlegevorrichtung (3) nach Anspruch 20 zur oberflächennahen Verlegung von axial beabstandeten Gruppen (22) von Wärmetauscherrohrleitungen (21) in Böden (1) zur Gewinnung oberflächennaher thermischer Energie (agrothermische Energie) aus einer Tiefe zwischen 0,5 m und 3,0 m.

22. Verwendung einer Verlegevorrichtung (3) nach einem der Ansprüche 20 oder 21, **dadurch gekennzeichnet, dass** die Verlegevorrichtung (3) auf demselben Areal mehrfach, in verschiedenen Bodentiefen, eingesetzt wird, wobei die Verlegevorrichtung (3) jeden nachfolgenden Verlegevorgang in einer geringeren Bodentiefe als den vorhergehenden Verlegevorgang ausführt.

## Claims

1. A laying device (3) for simultaneous and free from tension laying of at least two substantially parallel and axially spaced apart groups (22) of flexible media lines (21) in at least one flat layer (A, B, C) in the soil (1), wherein each group (22) of flexible media lines (21) comprises at least one flexible media line (21) and the laying device comprises a cutting device (5, 9) for generating at least one slot in the ground (1); wherein the cutting device (5, 9) comprises exactly two substantially vertical arranged and horizontally staggered blades (5), having at their lower end one substantially horizontal arranged blade (9) which comprises at least two devices (6, 7) for dispensing the groups (22) of media lines (21) at a side opposite to the cutting direction.

2. The laying device (3) according to claim 1, wherein a precutting device (12a, 12b) that, viewed in a laying direction, is arranged in front of the cutting device (5, 9), and the precutting device (12a, 12b) has blades (12a, 12b) having an arrangement corresponding completely or partially to the arrangement of the cutting blades of the cutting device (5, 9).

3. The laying device (3) according to one of the foregoing claims, wherein, viewed in the laying direction, the precutting device is arranged at a front side of the laying device (3) and the cutting device (5, 9) at a rear side of the laying device (3).

4. The laying device (3) according to one of the foregoing claims, wherein horizontal and/or vertical guiding movements of the cutting device (5, 9) are realized by horizontal and/or vertical slanting movements and/or pivot movements of the horizontal and vertical blades (5, 9).

5. The laying device (3) according to one of the foregoing claims, wherein the groups of media lines are guided in the interior of the cutting device to the devices for dispensing the groups of media lines.

6. The laying device (3) according to one of the foregoing claims, wherein on or more blades (5, 9) of the cutting device (5, 9) and/or on a precutting device (12a, 12b) senders (17) and/or receivers (18) of sensors are arranged.

7. The laying device (3) according to one of the foregoing claims, wherein on or more blades (5, 9) of the cutting device (5, 9) and/or on the precutting device (12a, 12b) of a laying device (3) senders (17) and/or receivers (18) of sensors are arranged and the corresponding receivers (18) and/or senders (17) are arranged on or more blades (5, 9) of the cutting device (5, 9) and/or on the precutting device (12a, 12b) of a parallel-guided laying device (3).

8. The laying device (3) according to claim 6 or 7, wherein on or more blades (5, 9) of the cutting device (5, 9) and/or on the precutting device (12a, 12b) of a laying device (3) senders (17) and/or receivers (18) of sensors are arranged and their corresponding receivers (18) and/or senders (17) are arranged at stationary measuring sites (20) on the ground or in the ground (1).

9. A laying device (3) for simultaneous and free from tension laying of at least two substantially parallel and axially spaced apart groups (22) of flexible media lines (21) in at least one flat layer (A, B, C) in the soil (1), wherein each group (22) of flexible media lines (21) comprises at least one flexible media line (21) and the laying device (3) comprises a cutting device (8) for generating at least one slot in the ground (1); wherein the cutting device (8), projected in cutting direction, has a round, semicircular, oval, polygonal or Y-shaped configuration; and comprises at least two devices for dispensing the groups of media lines arranged on the side of the laying device that is facing in a direction opposite to the cutting direction; and the groups of media lines are guided in the interior of the cutting device to the at least two devices for dispensing the groups of media lines.

10. The laying device (3) according to one of the foregoing claims, wherein a horizontal and/or vertical slant of the cutting device (5, 8, 9) or of parts of the cutting device (5, 8, 9) is adjustable.

11. The laying device (3) according to one of the foregoing claims, wherein the cutting device is loaded by vibrations, oscillations or shaking movements.

12. The laying device (3) according to one of the foregoing claims, wherein the media lines are ready-made and packaged in exchangeable prepackaged units that are carried on the laying device, wherein the media lines are guided from the prepackaged units to the cutting device.

13. Support device with laying device (3) according to one of the foregoing claims, wherein the cutting device (5, 8, 9) is arranged on the carrying device.

14. Support device with laying device (3) according to claim 13, wherein horizontal and/or vertical guiding movements of the cutting device are realized by horizontal and/or vertical slanting movements of the support device.

15. A method for surface-near laying of axially spaced apart groups of flexible media lines (22) by means of a laying device (3) according to one of the claims 1 to 8 or 11 or 12, wherein by usage of said laying device (3) with the cutting device (5, 8, 9) by the exactly two substantially vertical arranged and horizontally staggered blades (5) and the one at their lower end and substantially horizontal arranged blade (9) at least one slot in the ground (1) is generated and at least two groups (22) of media lines (21) are dispensed at a side opposite to the cutting direction.

16. The method according to claim 15, wherein while generating the slot in the ground (1) a physical soil exploration is performed.

17. The method according to one of the claims 15 or 16, wherein, before using the cutting device (5, 9) the soil is loosened by a precutting device at least partially at locations that are to be cut by the blades (5, 9) of the cutting device (5, 9).

18. The method according to one of the claims 15 to 17, wherein by usage of the laying device (3) the laying depth is varied at predetermined laying positions.

19. The method according to one of the claims 15 to 18 wherein between the cutting device (5, 9) and the ground (1) a friction-reducing means is introduced.

20. Usage of the laying device (3) according to one of the claims 1 to 12 for surface-near laying of axially spaced apart groups (22) of drainage pipes.

21. Usage of the laying device (3) according to claim 20 to surface-near laying of axially spaced apart groups (22) of heat exchanger pipes (21) in grounds (1) for exploitation of surface-near thermal energy (agro-thermic energy) out of a deep between 0,5 m and 3,0 m.

22. Usage of the laying device (3) according to one of the claims 20 or 21, wherein the laying device (3) is used repeatedly at different soil depths on the same area, and the laying device performs each subsequent laying process at a reduced soil depth as compared to the preceding laying process.

## Revendications

1. Dispositif de pose (3) pour la pose simultanée et sans contraintes d'au moins deux groupes (22), sensiblement parallèles et axialement distants, de conduites de fluide souples (21) en au moins une couche plane (A, B, C) dans le sol (1), sachant que chaque groupe (22) de conduites de fluide souples (21) présente au moins une conduite de fluide souple (21) et que le dispositif de pose (3) présente un dispositif de coupe (5, 9) pour produire au moins une entaille dans le sol (1), sachant que le dispositif de coupe (5, 9) présente exactement deux lames (5) disposées sensiblement verticalement et échelonnées en direction transversale, à l'extrémité inférieure desquelles est disposée une lame (9) orientée sensiblement horizontalement, qui présente au moins deux dispositifs (6, 7) pour larguer les groupes (22) de conduites de fluide (21) sur le côté opposé à la direction de coupe.

2. Dispositif de pose (3) selon la revendication précédente, **caractérisé en ce qu'**un équipement de pré-coupe (12a, 12b) est disposé avant le dispositif de coupe (5, 9), considéré dans la direction de pose, équipement dont les lames (12a, 12b) correspondent totalement ou partiellement à celles du dispositif de coupe (5, 9).

3. Dispositif de pose (3) selon l'une des revendications précédentes, **caractérisé en ce que** l'équipement de pré-coupe (12a, 12b) est disposé, considéré dans la direction de pose, sur le côté avant du dispositif de pose (3), et le dispositif de coupe (5, 9) sur le côté arrière.

4. Dispositif de pose (3) selon l'une des revendications précédentes, **caractérisé en ce que** des mouvements directeurs horizontaux et/ou verticaux du dispositif de coupe (5, 9) sont réalisés par des mouvements d'inclinaison et/ou de rotation horizontaux et/ou verticaux des lames horizontales et/ou verticales (5, 9).

5. Dispositif de pose (3) selon l'une des revendications précédentes, **caractérisé en ce que** les groupes de conduites de fluide sont dirigées à l'intérieur du dispositif de coupe jusqu'aux dispositifs pour larguer les groupes de conduites de fluide.

6. Dispositif de pose (3) selon l'une des revendications précédentes, **caractérisé en ce que** des émetteurs (17) et/ou des récepteurs (18) de capteurs sont disposés sur une ou plusieurs des lames (5, 9) du dispositif de coupe (5, 9) et/ou de l'équipement de pré-coupe (12a, 12b).

7. Dispositif de pose (3) selon l'une des revendications précédentes, **caractérisé en ce que** des émetteurs (17) et/ou des récepteurs (18) de capteurs sont disposés sur une ou plusieurs des lames (5, 9) du dispositif de coupe (5, 9) et/ou de l'équipement de pré-coupe (12a, 12b) d'un dispositif de pose (3), et leurs récepteurs (18) et/ou émetteurs (17) correspondants sont disposés sur une ou plusieurs des lames (5, 9) du dispositif de coupe (5, 9) et/ou de l'équipement de pré-coupe (12a, 12b) d'un dispositif de pose (3) dirigé en parallèle.

8. Dispositif de pose (3) selon la revendication 6 ou 7, **caractérisé en ce que** des émetteurs (17) et/ou des récepteurs (18) de capteurs sont disposés sur une ou plusieurs des lames (5, 9) du dispositif de coupe (5, 9) et/ou de l'équipement de pré-coupe (12a, 12b) du dispositif de pose (3), et leurs récepteurs (18) et/ou émetteurs (17) correspondants sont disposés sur des postes de mesure fixes (20) sur le sol (1) et/ou dans le sol (1).

9. Dispositif de pose (3) pour la pose simultanée et sans contraintes d'au moins deux groupes (22), sensiblement parallèles et axialement distants, de conduites de fluide souples (21) en au moins une couche plane (A, B, C) dans le sol (1), sachant que chaque groupe (22) de conduites de fluide souples (21) présente au moins une conduite de fluide souple (21) et que le dispositif de pose (3) présente un dispositif de coupe (8) pour produire au moins une entaille dans le sol (1), sachant que le dispositif de coupe (8) présente, considéré dans la direction de coupe, une conformation ronde, semi-circulaire, ovale, polygonale ou en Y et présente, sur le côté opposé à la direction de coupe, au moins deux dispositifs (6) pour larguer les groupes (22) de conduites de fluide (21), et sachant que les conduites de fluide sont dirigées à l'intérieur du dispositif de coupe jusqu'aux au moins deux dispositifs (6) pour larguer les groupes (22) de conduites de fluide (21).

10. Dispositif de pose (3) selon l'une des revendications précédentes, **caractérisé en ce que** l'inclinaison horizontale et/ou verticale du dispositif de coupe (5, 8, 9) ou de parties du dispositif de coupe (5, 8, 9) peut être modifiée.

11. Dispositif de pose (3) selon l'une des revendications précédentes, **caractérisé en ce que** le dispositif de coupe (5, 8, 9) est sollicité par des vibrations, des oscillations ou des secousses.

12. Dispositif de pose (3) selon l'une des revendications précédentes, **caractérisé en ce que** les conduites de fluide préfabriquées (21) sont emportées avec le dispositif de pose (3) dans des récipients remplaçables, et sont dirigées hors des récipients dans le dispositif de coupe (5, 8, 9).

13. Équipement porteur avec un dispositif de pose (3) selon l'une des revendications précédentes, **caractérisé en ce que** le dispositif de coupe (5, 8, 9) est disposé sur l'équipement porteur.

14. Équipement porteur avec un dispositif de pose (3) selon la revendication 13, **caractérisé en ce que** des mouvements directeurs horizontaux et/ou verticaux du dispositif de coupe (5, 8, 9) sont réalisés par des mouvements d'inclinaison horizontaux et/ou verticaux de l'équipement porteur.

15. Procédé pour poser à proximité de la surface des groupes axialement distants (22) de conduites de fluide souples au moyen d'un dispositif de pose (3) selon l'une des revendications 1 à 8 ainsi que 11 ou 12, **caractérisé en ce que**, en utilisant ce dispositif de pose (3) équipé du dispositif de coupe (5, 8, 9), on produit au moins une entaille dans le sol par les exactement deux lames (5) disposées sensiblement verticalement et échelonnées en direction transversale et par la lame (9) orientée sensiblement horizontalement à leur extrémité inférieure, et au moins deux groupes (22) de conduites de fluide (21) sont largués sur le côté opposé à la direction de coupe.

16. Procédé selon la revendication 15, **caractérisé en ce qu'**on effectue une analyse physique du sol lors de la réalisation de l'entaille dans le sol.

17. Procédé selon la revendication 15 ou 16, **caractérisé en ce qu'**avant, chronologiquement, l'utilisation du dispositif de coupe (5, 9), un équipement de pré-coupe (12a, 12b) ameublit le sol au moins partiellement aux endroits qui sont entaillés par les lames (5, 9) du dispositif de coupe (5, 9).

18. Procédé selon l'une des revendications 15 à 17, **caractérisé en ce que** la profondeur de pose est modifiée en utilisant le dispositif de pose (3) à des positions de pose prédéfinies.

19. Procédé selon l'une des revendications précédentes 15 à 18, **caractérisé en ce qu'**un moyen réduisant la friction est placé entre le dispositif de coupe (5, 9) et le sol (1).

20. Utilisation d'un dispositif de pose (3) selon l'une des revendications 1 à 12 pour poser à proximité de la surface des groupes axialement distants (22) de tubes de drainage (21).

21. Utilisation d'un dispositif de pose (3) selon la revendication 20 pour poser à proximité de la surface des groupes axialement distants (22) de conduites d'échangeur de chaleur (21) dans le sol (1), afin de récupérer l'énergie thermique proche de la surface (énergie agrothermique), à une profondeur comprise entre 0,5 m et 3,0 m.

22. Utilisation d'un dispositif de pose (3) selon la revendication 20 ou 21, **caractérisée en ce que** le dispositif de pose (3) est utilisé plusieurs fois à différentes profondeurs sur la même zone, sachant que le dispositif de pose (3) accomplit chaque opération de pose suivante à une plus faible profondeur que l'opération de pose précédente.
